# EUROPEAN PATENT APPLICATION

(11) **EP 4 488 727 A1**
(43) Date of publication of application: **08.01.2025**
(21) Application number: 23760219.8
(22) Date of filing: 28.02.2023
(51) Int. Cl.: G02B 5/22, G02C 7/10

(54) **PLASTIC BASE MATERIAL AND PLASTIC EYEGLASS LENS**

(30) Priority: 28.02.2022 JP 2022030161
(71) Applicant: Hopnic Laboratory Co., Ltd., Sabae-shi Fukui 916-0073 (JP)
(72) Inventor: TOMIYAMA Teruyoshi, Sabae-city Fukui 9160073 (JP)
(74) Representative: Schaumburg und Partner Patentanwälte mbB
(86) International application number: PCT/JP2023/007365
(87) International publication number: WO 2023/163221

(57) **Abstract**

A plastic base material having a high transparency while having ultraviolet cutting, blue light cutting, and anti-glare functions and a plastic eyeglass lens comprising such a plastic base material are provided. A translucent plastic base material comprises a resin and an absorbing dye, wherein in a spectral transmittance curve, a half-value wavelength on the short-wavelength side at which a transmittance is 50% is 410 to 430 nm, an average transmittance at 440 to 480 nm is 60 to 90%, an average transmittance at 500 to 530 nm is 75 to 95%, an average transmittance at 630 to 700 nm is 80 to 98%, and there is a local minimum between 550 and 600 nm.

## Description

### TECHNICAL FIELD

The present invention relates to a plastic base material and a plastic eyeglass lens, and particularly relates to a plastic base material having an anti-glare function and a plastic eyeglass lens.

### BACKGROUND ART

Conventionally, a possibility that ultraviolet light induces keratitis and cataract has been pointed out, and eyeglass lenses having an ultraviolet cutting function have been in practical use in order to protect eyes from harmful ultraviolet light.

In addition, in recent years, an influence of blue light on eyes in which blue light emitted from displays such as liquid-crystal displays and smartphones causes the feeling of eye fatigue and pain, and the like have been problems. Hence, eyeglass lenses having ultraviolet · blue light cutting functions for reducing ultraviolet light to blue light at around 420 nm have also been proposed (for example, Patent Literature 1).

For example, Patent Literature 1 discloses a lens including a resin and an ultraviolet absorber (an indole compound), and states that this can reduce an influence of blue light at a wavelength of 420 nm on eyes.

In addition, in recent years, eyeglass lenses having an anti-glare function have also been proposed to reduce discomfort, blurriness of contrast, eye strain, and the like which are associated with glare of visible light (for example, Patent Literature 2).

For example, Patent Literature 2 discloses a lens including a resin and an absorbing dye (a tetraazaporphyrin compound) having a main absorption peak between wavelengths of 565 nm and 605 nm, and states that this can reduce light around a wavelength of 585 nm, thus imparting an anti-glare property and enhancing contrast.

### CITATION LIST

### PATENT LITERATURES

Patent Literature 1: Japanese Patent Application Publication No. 2021-43231
Patent Literature 2: Japanese Patent No. 5778109

### SUMMARY OF INVENTION

### TECHNICAL PROBLEM

However, although an anti-glare property and a high contrast can be obtained, the lens described in Patent Literature 2 has such a problem that the lens itself is colored (looks bluish or dark) by an influence of the absorbing dye. Hence, there has been a demand for a bright lens having a high transparency (that is, looks colorless and transparent) from the viewpoint of fashionability and needs of daily use irrespective of indoor or outdoor.

In addition, since the lens described in Patent Literature 2 does not have ultraviolet cutting or blue light cutting function, lenses further having ultraviolet cutting and blue light cutting functions have been demanded from the market.

The present invention has been made in view of such circumstances, and an object thereof is to provide a plastic base material having a high transparency while having ultraviolet cutting, blue light cutting, and anti-glare functions, and a plastic eyeglass lens comprising such a plastic base material.

### SOLUTION TO PROBLEM

In view of this, as a result of conducting earnest studies in order to achieve the above object, the present inventor found that it is possible to obtain a plastic base material having a high transparency while having ultraviolet cutting, blue light cutting, and anti-glare functions by combining a plurality of absorbing dyes to obtain a configuration in which in a spectral transmittance curve, a half-value wavelength on the short-wavelength side at which a transmittance is 50% is 410 to 430 nm, an average transmittance at 440 to 480 nm is 60 to 90%, an average transmittance at 500 to 530 nm is 75 to 95%, an average transmittance at 630 to 700 nm is 80 to 98%, and there is a local minimum between 550 and 600 nm (that is, a configuration in which a spectral transmittance curve has a certain balance). The present invention has been completed based on such finding.

Specifically, a plastic base material of the present invention is a translucent plastic base material comprising a resin and an absorbing dye, wherein in a spectral transmittance curve, a half-value wavelength on the short-wavelength side at which a transmittance is 50% is 410 to 430 nm, an average transmittance at 440 to 480 nm is 60 to 90%, an average transmittance at 500 to 530 nm is 75 to 95%, an average transmittance at 630 to 700 nm is 80 to 98%, and there is a local minimum between 550 and 600 nm.

Such a configuration makes it possible to allow the spectral transmittance curve to have a certain balance and obtain a plastic base material having a high transparency while having ultraviolet cutting, blue light cutting, and anti-glare functions.

In addition, it is desirable that the local minimum be 35 to 75%.

In addition, it is desirable that the plastic base material satisfy T 1<T2<T3 where T1 represents the average transmittance at 440 to 480 nm, T2 represents the average transmittance at 500 to 530 nm, and T3 represents the average transmittance at 630 to 700 nm.

In addition, it is desirable that the resin be at least one selected from the group consisting of a urethane thermosetting resin, a (meth)acrylic thermosetting resin, a polycarbonate resin, and a polyamide resin.

In addition, it is desirable that the absorbing dye contain: a first dye having a maximum absorption wavelength in a range of 350 to 425 nm; a second dye having a maximum absorption wavelength in a range of 460 to 480 nm; a third dye having a maximum absorption wavelength in a range of 490 to 510 nm; a fourth dye having a maximum absorption wavelength in a range of 565 to 605 nm; and a fifth dye having a maximum absorption wavelength in a range of 590 to 650 nm. In addition, in this case, it is desirable that the first dye be a benzotriazole dye, the second dye be a merocyanine dye, the third dye be an anthraquinone dye, the fourth dye be a tetraazaporphyrin dye, and the fifth dye be an anthraquinone dye. In addition, in this case, it is desirable that a concentration of the first dye be 0.2 to 0.8%, a concentration of the second dye be 0.5 to 2.0 ppm, a concentration of the third dye be 1.0 to 6.0 ppm, a concentration of the fourth dye be 1.0 to 7.0 ppm, and a concentration of the fifth dye be 0.2 to 3.0 ppm.

In addition, it is desirable that a correlated color temperature of light after passing through the plastic base material be in a range of ±7% of a correlated color temperature of light before passing through the plastic base material.

In addition, it is desirable that the plastic base material comprise a multi-coat layer which functions as an antireflective film on at least one surface of an outer surface or an inner surface of the plastic base material.

In addition, from another viewpoint, a plastic eyeglass lens of the present invention comprises any one of the above-mentioned plastic base materials. In addition, in this case, it is desirable that the plastic base material be formed by being laminated on a base material. In addition, in this case, it is desirable that the plastic eyeglass lens comprise a functional layer on at least one surface of an outer surface or an inner surface of the plastic eyeglass lens, wherein the functional layer is one or more layers selected from the group consisting of a primer layer, a hard coat layer, an antireflective layer, and a water-repellent and oil-repellent layer.

### ADVANTAGEOUS EFFECTS OF INVENTION

As described above, according to the present invention, a plastic base material having a high transparency while having ultraviolet cutting, blue light cutting, and anti-glare functions can be achieved. In addition, a plastic eyeglass lens comprising such a plastic base material can be achieved.

### BRIEF DESCRIPTION OF DRAWINGS

[Fig. 1] Fig. 1 is diagrams for explaining a configuration of a plastic base material according to a first embodiment of the present invention.
[Fig. 2] Fig. 2 is a diagram showing an example of absorbances of absorbing dyes of the plastic base material according to the first embodiment of the present invention.
[Fig. 3] Fig. 3 is a diagram showing a spectral transmittance curve of a plastic base material according to the first embodiment (Example 1) of the present invention.
[Fig. 4] Fig. 4 is a diagram showing a spectral transmittance curve of a plastic base material according to the first embodiment (Example 2) of the present invention.
[Fig. 5] Fig. 5 is a diagram showing a spectral transmittance curve of a plastic base material according to the first embodiment (Example 3) of the present invention.
[Fig. 6] Fig. 6 is a diagram showing a spectral transmittance curve of a plastic base material according to the first embodiment (Example 4) of the present invention.
[Fig. 7] Fig. 7 is a diagram showing a spectral transmittance curve of a plastic base material according to the first embodiment (Example 5) of the present invention.
[Fig. 8] Fig. 8 is a diagram showing a spectral transmittance curve of a plastic base material according to the first embodiment (Example 6) of the present invention.
[Fig. 9] Fig. 9 is a diagram showing a spectral transmittance curve of a plastic base material according to the first embodiment (Example 7) of the present invention.
[Fig. 10] Fig. 10 is a diagram showing a spectral transmittance curve of a plastic base material according to the first embodiment (Example 8) of the present invention.
[Fig. 11] Fig. 11 is a diagram showing a spectral transmittance curve of a plastic base material according to the first embodiment (Example 9) of the present invention.
[Fig. 12] Fig. 12 is a diagram showing a spectral transmittance curve of a plastic base material according to the first embodiment (Example 10) of the present invention.
[Fig. 13] Fig. 13 is a diagram showing a spectral transmittance curve of a plastic base material according to Comparative Example (Comparative Example 1) of the first embodiment of the present invention.
[Fig. 14] Fig. 14 is a diagram showing a spectral transmittance curve of a plastic base material according to Comparative Example (Comparative Example 2) of the first embodiment of the present invention.
[Fig. 15] Fig. 15 is a diagram showing a spectral transmittance curve of a plastic base material according to Comparative Example (Comparative Example 3) of the first embodiment of the present invention.
[Fig. 16] Fig. 16 is a diagram showing an experiment model of an experiment to confirm the effects of the plastic base material according to the first embodiment of the present invention.
[Fig. 17] Fig. 17 is a diagram for explaining a configuration of a plastic base material according to a second embodiment of the present invention.
[Fig. 18] Fig. 18 is a diagram for explaining a configuration of a plastic base material according to a third embodiment of the present invention.
[Fig. 19] Fig. 19 is a diagram showing a spectral transmittance curve of a plastic base material according to the third embodiment (Example 11) of the present invention.
[Fig. 20] Fig. 20 is a diagram showing a spectral transmittance curve of a plastic base material according to the third embodiment (Example 12) of the present invention.
[Fig. 21] Fig. 21 is a diagram showing a spectral transmittance curve of a plastic base material according to the third embodiment (Example 13) of the present invention.
[Fig. 22] Fig. 22 is a diagram showing a spectral transmittance curve of a plastic base material according to the third embodiment (Example 14) of the present invention.
[Fig. 23] Fig. 23 is a diagram showing a spectral transmittance curve of a plastic base material according to the third embodiment (Example 15) of the present invention.
[Fig. 24] Fig. 24 is a diagram showing a spectral transmittance curve of a plastic base material according to the third embodiment (Example 16) of the present invention.
[Fig. 25] Fig. 25 is a diagram showing a spectral transmittance curve of a plastic base material according to the third embodiment (Example 17) of the present invention.
[Fig. 26] Fig. 26 is a diagram showing a spectral transmittance curve of a plastic base material according to the third embodiment (Example 18) of the present invention.
[Fig. 27] Fig. 27 is a diagram showing a spectral transmittance curve of a plastic base material according to the third embodiment (Example 19) of the present invention.
[Fig. 28] Fig. 28 is a diagram showing a spectral transmittance curve of a plastic base material according to the third embodiment (Example 20) of the present invention.

### DESCRIPTION OF EMBODIMENTS

Hereinafter, embodiments of the present invention will be described in detail with reference to the drawings. Note that in the drawings, the same or corresponding portions are denoted by the same reference signs, and descriptions thereof are not repeated.

### (First Embodiment)

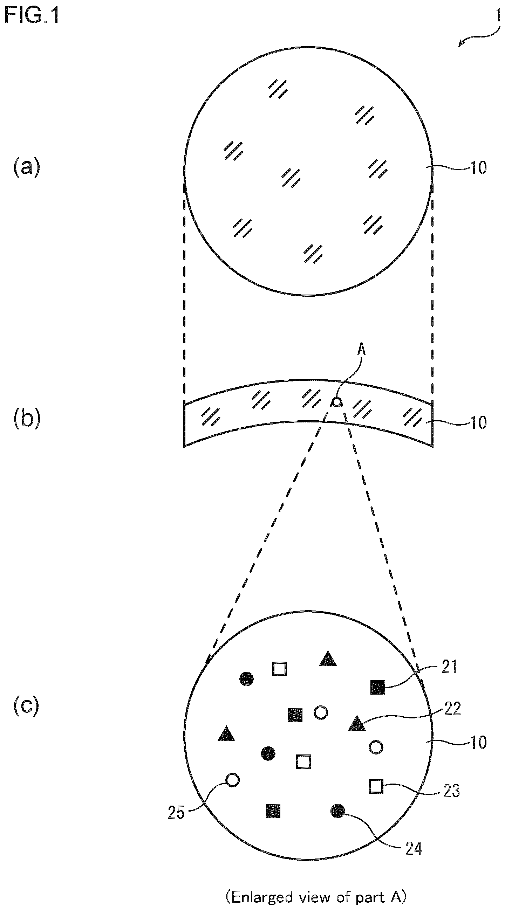

Fig. 1 is diagrams for explaining a configuration of a plastic base material 1 according to a first embodiment of the present invention. Fig. 1(a) is a plan view, Fig. 1(b) is a longitudinal sectional view, and Fig. 1(c) is an enlarged view of part A of Fig. 1(b). The plastic base material 1 of the present embodiment is a plate-shaped optical member having transparency, which is disposed and used in front of an eye, such as an eyeglass lens or a face shield, for example, and as shown in Fig. 1(c), is configured with a resin material 10 and a plurality of (five in Fig. 1(c)) absorbing dyes 21 to 25 contained in the resin material 10.

Note that although the plastic base material 1 is shown as a circular eyeglass lens in Fig. 1, the plastic base material 1 may take any shape (for example , a plate shape, a film shape, or the like) depending on the application.

### [Resin Material]

The resin material 10 (resin) of the present embodiment is a transparent resin material, and specifically, is preferably at least one selected from the group consisting of a urethane thermosetting resin, a (meth)acrylic thermosetting resin, a polycarbonate resin, a polyamide resin, an ADC (allyl diglycol carbonate) resin, and an ultraviolet curable resin, for example.

The plastic base material 1 of the present embodiment can be obtained by molding the resin material 10 containing the absorbing dyes 21 to 25 into a certain shape (for example , a shape of an eyeglass lens).

### [Absorbing Dyes]

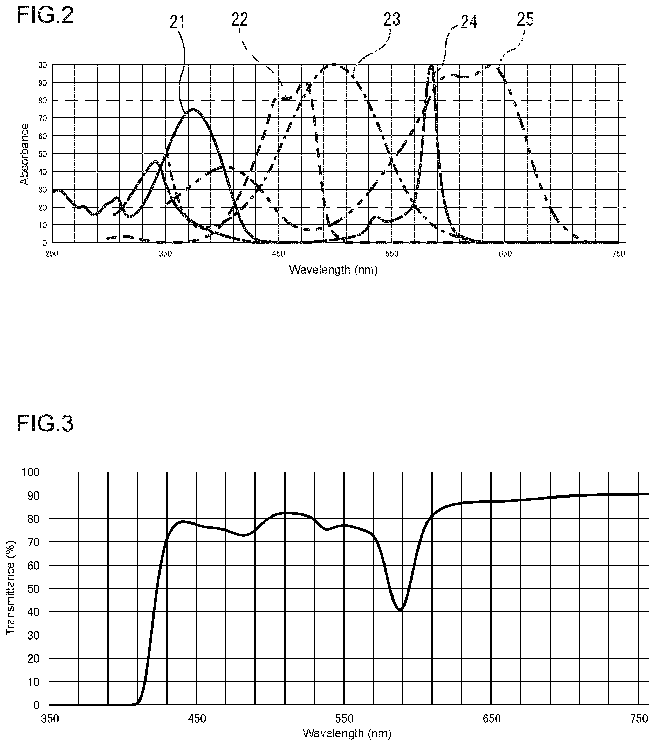

The absorbing dyes 21 to 25 are dyes which absorb light of specific wavelengths, and are uniformly dissolved or dispersed in the resin material 10. Fig. 2 is a diagram showing an example of absorbances of the absorbing dyes 21 to 25 of the present embodiment. In Fig. 2, the horizontal axis indicates the wavelength (nm), and the vertical axis indicates the absorbance.

The absorbing dye 21 (first dye) is, for example , a dye having a peak of absorption in a range of 350 to 425 nm and a half-value width of the peak of 20 to 70 nm. Specific examples of the absorbing dye 21 includes, for example, a benzotriazole dye, a benzophenone dye, a triazine dye, a styryl dye, a benzoxazinone dye, a cyanoacrylate dye, an oxanilide dye, a salicylate dye, a formamidine dye, an indole dye, an azomethine dye, and the like. Note that the concentration of the absorbing dye 21 is preferably 0.2 to 0.8%, and more preferably 0.3 to 0.7%, relative to the resin (monomer) forming the resin material 10.

The absorbing dye 22 (second dye) is, for example, a dye having a peak of absorption in a range of 460 to 480 nm (maximum absorption wavelength) and a half-value width of the peak of 50 to 100 nm. Specific examples of the absorbing dye 22 include, for example, a merocyanine dye, an oxazole dye, a cyanine dye, a naphthalimide dye, an oxadiazole dye, an oxazine dye, an oxazolidine dye, a naphthalic acid dye, a styryl dye, an anthracene dye, a cyclic carbonyl dye, a triazole dye, and the like. Note that the concentration of the absorbing dye 22 is preferably 0.5 to 2.0 ppm, and more preferably 0.75 to 1.5 ppm, relative to the resin (monomer) forming the resin material 10.

The absorbing dye 23 (third dye) is, for example, a dye having a peak of absorption (maximum absorption wavelength) in a range of 490 to 510 nm and a half-value width of the peak of 80 to 120 nm. Specific examples of the absorbing dye 22 include, for example, an anthraquinone dye, a squarylium dye, a phthalocyanine dye, a cyanine dye, an azo dye, a perinone dye, a perylene dye, a methine dye, a quinoline dye, an azine dye, a diketopyrrolopyrrole (DPP) dye, a croconium dye, a metal complex, a diimmonium dye, and the like. Note that the concentration of the absorbing dye 22 is preferably 1.0 to 6.0 ppm, and more preferably 1.65 to 5.65 ppm, relative to the resin (monomer) forming the resin material 10.

The absorbing dye 24 (fourth dye) is, for example, a dye having a peak of absorption (maximum absorption wavelength) in a range of 565 to 605 nm and a half-value width of the peak of 20 to 40 nm. Specific examples of the absorbing dye 22 include, for example, a tetraazaporphyrin dye. Note that the concentration of the absorbing dye 22 is preferably 1.0 to 7.0 ppm, and more preferably 2.0 to 6.0 ppm, relative to the resin (monomer) forming the resin material 10.

The absorbing dye 25 (fifth dye) is, for example, a dye having a peak of absorption (maximum absorption wavelength) in a range of 590 to 650 nm and a half-value width of the peak of 100 to 130 nm. Specific examples of the absorbing dye 22 include, for example, an anthraquinone dye, a squarylium dye, a phthalocyanine dye, a cyanine dye, an azo dye, a perinone dye, a perylene dye, a methine dye, a quinoline dye, an azine dye, a diketopyrrolopyrrole (DPP) dye, a croconium dye, a metal complex, a diimmonium dye, and the like. Note that the concentration of the absorbing dye 22 is preferably 0.2 to 3.0 ppm, and more preferably 0.3 to 2.5 ppm, relative to the resin (monomer) forming the resin material 10.

In this way, the plastic base material 1 of the present embodiment contains five absorbing dyes 21 to 25 in the resin material 10 and is configured to absorb light of specific wavelengths with this.

Then, the plastic base material 1 which has an anti-glare function and a high transparency (that is, looks colorless and transparent) while being capable of cutting ultraviolet light and blue light is achieved by adjusting the contents (concentrations) of the respective absorbing dyes 21 to 25 such that the spectral transmittance curve of the plastic base material 1 has a certain balance.

Specifically, the plastic base material 1 is configured such that in a spectral transmittance curve, a half-value wavelength on the short-wavelength side at which a transmittance is 50% is 410 to 430 nm, an average transmittance at 440 to 480 nm is 60 to 90%, an average transmittance at 500 to 530 nm is 75 to 95%, an average transmittance at 630 to 700 nm is 80 to 98%, and there is a local minimum between 550 and 600 nm.

In addition, the plastic base material 1 is configured to satisfy T1<T2<T3, where T1 represents the average transmittance at 440 to 480 nm, T2 represents the average transmittance at 500 to 530 nm, and T3 represents the average transmittance at 630 to 700 nm.

In addition, the local minimum between 550 and 600 nm is set to be 35 to 75%.

### [Method for Manufacturing Plastic Base Material 1]

The plastic base material 1 of the present embodiment is manufactured by the following processes.

### 1. Preparation of Dye Solution

Into a beaker, a predetermined amount of MEK (methyl ethyl ketone)) is put, and predetermined amounts of the respective absorbing dyes 21 to 25 are sequentially put to prepare a dye solution.

### 2. Mixing with Solution A and Degassing

A predetermined amount of the dye solution is added to a predetermined amount of a monomer (solution A), followed by conducting vacuum degassing with agitation.

### 3. Mixing with Monomer (Preparation of Prepared Liquid)

The dye solution from which degassing is completed is added to a predetermined amount of a monomer (solution B), followed by degassing with agitation to prepare a prepared liquid.

### 4. Molding

The prepared liquid is defoamed, is filtered with a PTFE (polytetrafluoroethylene) filter, and is put into a mold. Then, the mold in which the prepared liquid is put is gradually increased in temperature from 25°C to 130°C, and is maintained at 130°C for 2 hours, and thereafter is cooled to room temperature. The monomers are polymerized in the mold by such heating and cooling of the mold, so that a compact of the plastic base material 1 is molded. After the polymerization is completed, the compact is released from the mold, and is left to stand in an environment of 130°C for 2 hours to be annealed.

Hereinafter, the plastic base material 1 of the present embodiment will be further described by giving Examples 1 to 10 and Comparative Examples 1 to 3. Note that the present invention is not limited to the following Examples.

Table 1 and Table 2 are tables showing the materials (the resin material 10 and the absorbing dyes 21 to 25), the outer shape (the diameter and the thickness), the luminous transmittance, the half-value wavelength (the half-value wavelength on the short-wavelength side at which the transmittance is 50%), the average transmittance at a wavelength of 440 to 480 nm, the average transmittance at 500 to 530 nm, the average transmittance at 630 to 700 nm, and the local minimum between 550 and 600 nm and its wavelength of each of the plastic base materials 1 of Examples 1 to 10 and the plastic base materials of Comparative Examples 1 to 3.

In addition, Fig. 3 to Fig. 15 are diagrams showing a spectral transmittance curve of each of the plastic base materials 1 of Examples 1 to 10 and the plastic base materials of Comparative Examples 1 to 3. Note that in Fig. 3 to Fig. 15, the horizontal axis indicates the wavelength (nm), and the vertical axis indicates the transmittance (%).

**[Table 1]**

| | | Example 1 | Example 2 | Example 3 | Example 4 | Example 5 | Example 6 | Example 7 |
|---|---|---|---|---|---|---|---|---|
| Resin material 10 (monomer) | | 1.6 MR-8 | 1.6 MR-8 | 1.6 MR-8 | 1.6 MR-8 | 1.6 MR-8 | 1.6 MR-8 | 1.6 MR-8 |
| Absorbing dyes | PD311 (24) | 6.0 ppm | 2.0 ppm | 3.45 ppm | 3.45 ppm | 3.45 ppm | 3.45 ppm | 3.45 ppm |
| | Red HB (23) | 3.65 ppm | 3.65 ppm | 3.65 ppm | 3.65 ppm | 3.65 ppm | 3.65 ppm | 5.65 ppm |
| | Green G (25) | 0.95 ppm | 0.95 ppm | 0.95 ppm | 0.95 ppm | 0.95 ppm | 0.95 ppm | 0.95 ppm |
| | FDB-006 (22) | 1.5 ppm | 1.5 ppm | 4.0 ppm | 0.75 ppm | 1.5 ppm | 1.5 ppm | 1.5 ppm |
| | UV420 (21) | 0.53% | 0.53% | 0.53% | 0.53% | 0.70% | 0.30% | 0.53% |
| Diameter | | 70 mm | 70 mm | 70 mm | 70 mm | 70 mm | 70 mm | 70 mm |
| Thickness | | 2 mm | 2 mm | 2 mm | 2 mm | 2 mm | 2 mm | 2 mm |
| Luminous transmittance | | 73.3% | 81.8% | 78.2% | 78.7% | 78.1% | 78.5% | 77.7% |
| Half-value wavelength | | 423 nm | 422 nm | 423 nm | 422 nm | 425 nm | 420 nm | 422 nm |
| Average transmittance at 440 to 480 nm | | 76.1% | 76.5% | 62.2% | 81.0% | 75.8% | 76.5% | 75.9% |
| Average transmittance at 500 to 530 nm | | 81.6% | 83.5% | 81.8% | 83.0% | 82.6% | 82.8% | 81.1% |
| Average transmittance at 630 to 700 nm | | 88.0% | 88.1% | 88.0% | 87.8% | 88.0% | 88.1% | 88.0% |
| Local minimum between 550 and 600 nm | | 40.9% | 68.2% | 57.0% | 56.9% | 55.9% | 56.9% | 57.5% |
| (wavelength of the local minimum) | | (587 nm) | (588 nm) | (587 nm) | (588 nm) | (588 nm) | (587 nm) | (587 nm) |

**[Table 2]**

| | | Example 8 | Example 9 | Example 10 | Comparative Example 1 | Comparative Example 2 | Comparative Example 3 |
|---|---|---|---|---|---|---|---|
| Resin material 10 (monomer) | | 1.6 MR-8 | 1.6 MR-8 | 1.6 MR-8 | 1.6 MR-8 | 1.6 MR-8 | 1.6 MR-8 |
| Absorbing dyes | PD311 (24) | 3.45 ppm | 3.45 ppm | 3.45 ppm | 2.5 ppm | 6.0 ppm | 11.0 ppm |
| | Red HB (23) | 1.65 ppm | 3.65 ppm | 3.65 ppm | - | - | - |
| | Green G (25) | 0.95 ppm | 2.5 ppm | 0.3 ppm | - | - | - |
| | FDB-006 (22) | 1.5 ppm | 1.5 ppm | 1.5 ppm | - | - | - |
| | UV420 (21) | 0.53% | 0.53% | 0.53% | - | - | - |
| Diameter | | 70 mm | 70 mm | 70 mm | 70 mm | 70 mm | 70 mm |
| Thickness | | 2 mm | 2 mm | 2 mm | 2 mm | 2 mm | 2 mm |
| Luminous transmittance | | 80.0% | 78.4% | 79.5% | 90.1% | 83.8% | 75.7% |
| Half-value wavelength | | 422 nm | 422 nm | 422 nm | 408 nm | 407 nm | 408 nm |
| Average transmittance at 440 to 480 nm | | 77.9% | 76.2% | 77.1% | 96.6% | 96.4% | 96.3% |
| Average transmittance at 500 to 530 nm | | 85.3% | 82.6% | 83.3% | 95.1% | 93.6% | 91.7% |
| Average transmittance at 630 to 700 nm | | 88.2% | 87.2% | 89.5% | 97.2% | 97.2% | 96.7% |
| Local minimum between 550 and 600 nm (wavelength of the local minimum) | | 58.4% (587 nm) | 56.7% (587 nm) | 58.2% (587 nm) | 73.1% (588 nm) | 53.6% (588 nm) | 32.5% (588 nm) |

As shown in Table 1 and Table 2, in the respective plastic base materials 1 of Examples 1 to 10, a thiourethane resin (1.6 MR-8) produced by Mitsui Chemicals was selected as the resin material 10, a benzotriazole dye (UV absorber for UV+420) produced by Mitsui Chemicals was selected as the absorbing dye 21, a merocyanine dye (FDB-006) produced by Yamada Chemical Co., Ltd. was selected as the absorbing dye 22, an anthraquinone dye (KP PLAST Red HB) produced by Kiwa Chemical Industry Co., Ltd. was selected as the absorbing dye 23, a tetraazaporphyrin dye (PD-3115) produced by Yamamoto Chemicals Inc. was selected as the absorbing dye 24, and an anthraquinone dye (KP PLAST Green G) produced by Kiwa Chemical Industry Co., Ltd. was selected as the absorbing dye 25.

Then, the respective plastic base materials 1 of Examples 1 to 10 were prepared in concentrations of the absorbing dyes 21 to 25 shown in Table 1 and Table 2 in accordance with the above-mentioned manufacturing method.

In addition, in the respective plastic base materials of Comparative Examples 1 to 3, a thiourethane resin (1.6 MR-8) produced by Mitsui Chemicals was selected as the resin material 10, a tetraazaporphyrin dye (PD-311S) produced by Yamamoto Chemicals Inc. was selected as the absorbing dye 24, and the absorbing dyes 21, 22, and 23, 25 were not added to prepare the respective plastic base materials of Comparative Examples 1 to 3.

Note that the samples of the respective plastic base materials 1 of Examples 1 to 10 and the samples of the respective plastic base materials of Comparative Examples 1 to 3 were each an eyeglass lens having a diameter of 70 mm and a thickness of 2 mm.

### (Example 1)

In the plastic base material 1 of Example 1, the concentrations of the absorbing dyes 21 to 25 were set to 0.53%, 1.5 ppm, 3.65 ppm, 6.0 ppm, and 0.95 ppm, respectively.

As a result (Table 1), the plastic base material 1 in which the luminous transmittance was 73.3%, the half-value wavelength on the short-wavelength side at which the transmittance is 50% was 423 nm, the average transmittance at 440 to 480 nm was 76.1%, the average transmittance at 500 to 530 nm was 81.6%, the average transmittance at 630 to 700 nm was 88.0%, and the local minimum between 550 and 600 nm was 40.9% (@ 587 nm) was obtained.

From this result (Table 1, Fig. 3), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 587 nm was kept low (for example, 75% or lower), it can be seen that an anti-glare property was imparted and contrast was enhanced.

### (Example 2)

In the plastic base material 1 of Example 2, the concentrations of the absorbing dyes 21 to 25 were set to 0.53%, 1.5 ppm, 3.65 ppm, 2.0 ppm, and 0.95 ppm, respectively.

As a result (Table 1), the plastic base material 1 in which the luminous transmittance was 81.8%, the half-value wavelength on the short-wavelength side at which the transmittance is 50% was 422 nm, the average transmittance at 440 to 480 nm was 76.5%, the average transmittance at 500 to 530 nm was 83.5%, the average transmittance at 630 to 700 nm was 88.1%,, and the local minimum between 550 and 600 nm was 68.2% (@ 588 nm) was obtained.

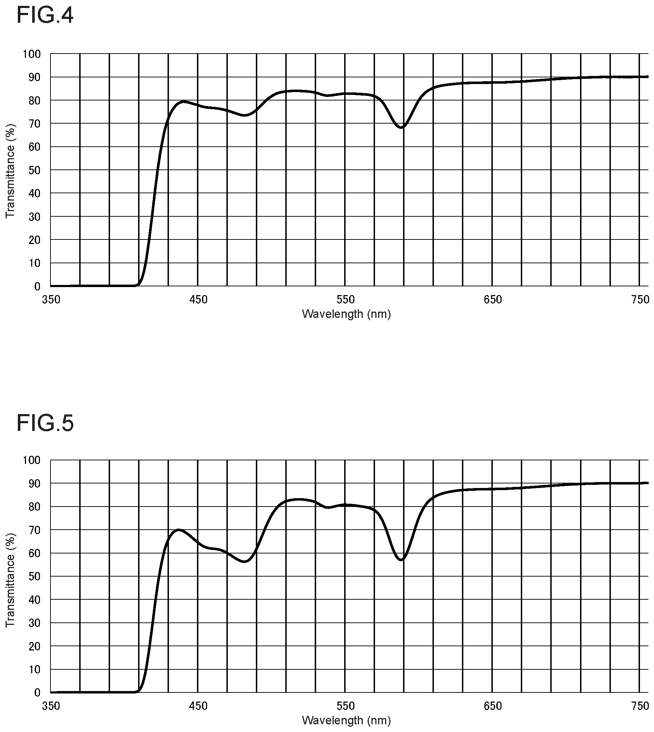

From this result (Table 1, Fig. 4), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 588 nm was kept low (for example, 75% or lower), it can be seen that an anti-glare property was imparted and contrast was enhanced.

### (Example 3)

In the plastic base material 1 of Example 3, the concentrations of the absorbing dyes 21 to 25 were set to 0.53%, 4.0 ppm, 3.65 ppm, 3.45 ppm, and 0.95 ppm, respectively.

As a result (Table 1), the plastic base material 1 in which the luminous transmittance was 78.2%, the half-value wavelength on the short-wavelength side at which the transmittance is 50% was 423 nm, the average transmittance at 440 to 480 nm was 62.2%, the average transmittance at 500 to 530 nm was 81.8%, the average transmittance at 630 to 700 nm was 88.0%, and the local minimum between 550 and 600 nm was 57.0% (@ 587 nm) was obtained.

From this result (Table 1, Fig. 5), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 587 nm was kept low (for example, 75% or lower), it can be seen that an anti-glare property was imparted and contrast was enhanced.

### (Example 4)

In the plastic base material 1 of Example 4, the concentrations of the absorbing dyes 21 to 25 were set to 0.53%, 0.75 ppm, 3.65 ppm, 3.45 ppm, and 0.95 ppm, respectively.

As a result (Table 1), the plastic base material 1 in which the luminous transmittance was 78.7%, the half-value wavelength on the short-wavelength side at which the transmittance is 50% was 422 nm, the average transmittance at 440 to 480 nm was 81.0%, the average transmittance at 500 to 530 nm was 83.0%, the average transmittance at 630 to 700 nm was 87.8%, and the local minimum between 550 and 600 nm was 56.9% (@ 588 nm) was obtained.

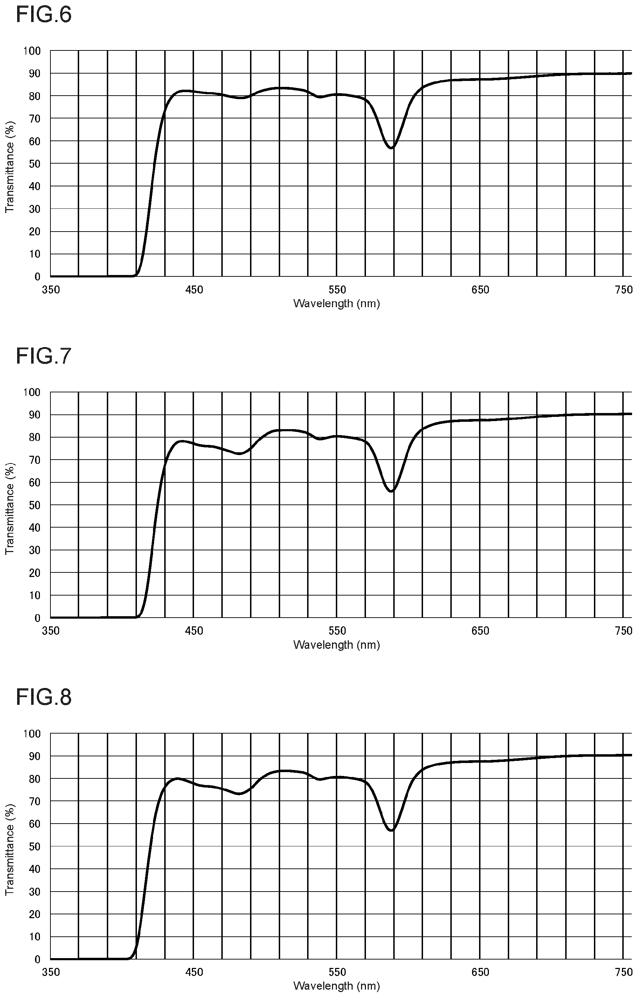

From this result (Table 1, Fig. 6), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 588 nm was kept low (for example, 75% or lower), it can be seen that an anti-glare property was imparted and contrast was enhanced.

### (Example 5)

In the plastic base material 1 of Example 5, the concentrations of the absorbing dyes 21 to 25 were set to 0.70%, 1.5 ppm, 3.65 ppm, 3.45 ppm, and 0.95 ppm, respectively.

As a result (Table 1), the plastic base material 1 in which the luminous transmittance was 75.8%, the half-value wavelength on the short-wavelength side at which the transmittance is 50% was 425 nm, the average transmittance at 440 to 480 nm was 75.8%, the average transmittance at 500 to 530 nm was 82.6%, the average transmittance at 630 to 700 nm was 88.0%, and the local minimum between 550 and 600 nm was 55.9% (@ 588 nm) was obtained.

From this result (Table 1, Fig. 7), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 588 nm was kept low (for example, 75% or lower), it can be seen that an anti-glare property was imparted and contrast was enhanced.

### (Example 6)

In the plastic base material 1 of Example 6, the concentrations of the absorbing dyes 21 to 25 were set to 0.30%, 1.5 ppm, 3.65 ppm, 3.45 ppm, and 0.95 ppm, respectively.

As a result (Table 1), the plastic base material 1 in which the luminous transmittance was 78.5%, the half-value wavelength on the short-wavelength side at which the transmittance is 50% was 420 nm, the average transmittance at 440 to 480 nm was 76.5%, the average transmittance at 500 to 530 nm was 82.8%, the average transmittance at 630 to 700 nm was 88.1%, and the local minimum between 550 and 600 nm was 56.9% (@ 587 nm) was obtained.

From this result (Table 1, Fig. 8), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 587 nm was kept low (for example, 75% or lower), it can be seen that an anti-glare property was imparted and contrast was enhanced.

### (Example 7)

In the plastic base material 1 of Example 7, the concentrations of the absorbing dyes 21 to 25 were set to 0.53%, 1.5 ppm, 5.65 ppm, 3.45 ppm, and 0.95 ppm, respectively.

As a result (Table 1), the plastic base material 1 in which the luminous transmittance was 77.7%, the half-value wavelength on the short-wavelength side at which the transmittance is 50% was 422 nm, the average transmittance at 440 to 480 nm was 75.9%, the average transmittance at 500 to 530 nm was 81.1%, the average transmittance at 630 to 700 nm was 88.0%, and the local minimum between 550 and 600 nm was 57.5% (@ 587 nm) was obtained.

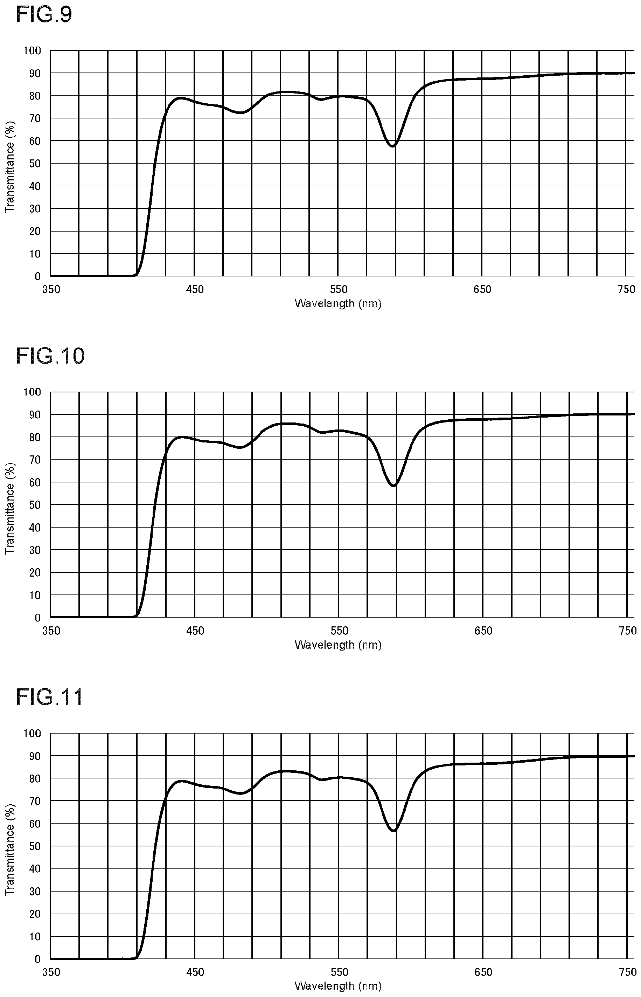

From this result (Table 1, Fig. 9), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 587 nm was kept low (for example, 75% or lower), it can be seen that an anti-glare property was imparted and contrast was enhanced.

### (Example 8)

In the plastic base material 1 of Example 8, the concentrations of the absorbing dyes 21 to 25 were set to 0.53%, 1.5 ppm, 1.65 ppm, 3.45 ppm, and 0.95 ppm, respectively.

As a result (Table 2), the plastic base material 1 in which the luminous transmittance was 80.0%, the half-value wavelength on the short-wavelength side at which the transmittance is 50% was 422 nm, the average transmittance at 440 to 480 nm was 77.9%, the average transmittance at 500 to 530 nm was 85.3%, the average transmittance at 630 to 700 nm was 88.2%, and the local minimum between 550 and 600 nm was 58.4% (@ 587 nm) was obtained.

From this result (Table 2, Fig. 10), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 587 nm was kept low (for example, 75% or lower), it can be seen that an anti-glare property was imparted and contrast was enhanced.

### (Example 9)

In the plastic base material 1 of Example 9, the concentrations of the absorbing dyes 21 to 25 were set to 0.53%, 1.5 ppm, 3.65 ppm, 3.45 ppm, and 2.5 ppm, respectively.

As a result (Table 2), the plastic base material 1 in which the luminous transmittance was 78.4%, the half-value wavelength on the short-wavelength side at which the transmittance is 50% was 422 nm, the average transmittance at 440 to 480 nm was 76.2%, the average transmittance at 500 to 530 nm was 82.6%, the average transmittance at 630 to 700 nm was 87.2%, and the local minimum between 550 and 600 nm was 56.7% (@ 587 nm) was obtained.

From this result (Table 2, Fig. 11), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 587 nm was kept low (for example, 75% or lower), it can be seen that an anti-glare property was imparted and contrast was enhanced.

### (Example 10)

In the plastic base material 1 of Example 10, the concentrations of the absorbing dyes 21 to 25 were set to 0.53%, 1.5 ppm, 3.65 ppm, 3.45 ppm, and 0.3 ppm, respectively.

As a result (Table 2), the plastic base material 1 in which the luminous transmittance was 79.5%, the half-value wavelength on the short-wavelength side at which the transmittance is 50% was 422 nm, the average transmittance at 440 to 480 nm was 77.1%, the average transmittance at 500 to 530 nm was 83.3%, the average transmittance at 630 to 700 nm was 89.5%, and the local minimum between 550 and 600 nm was 58.2% (@ 587 nm) was obtained.

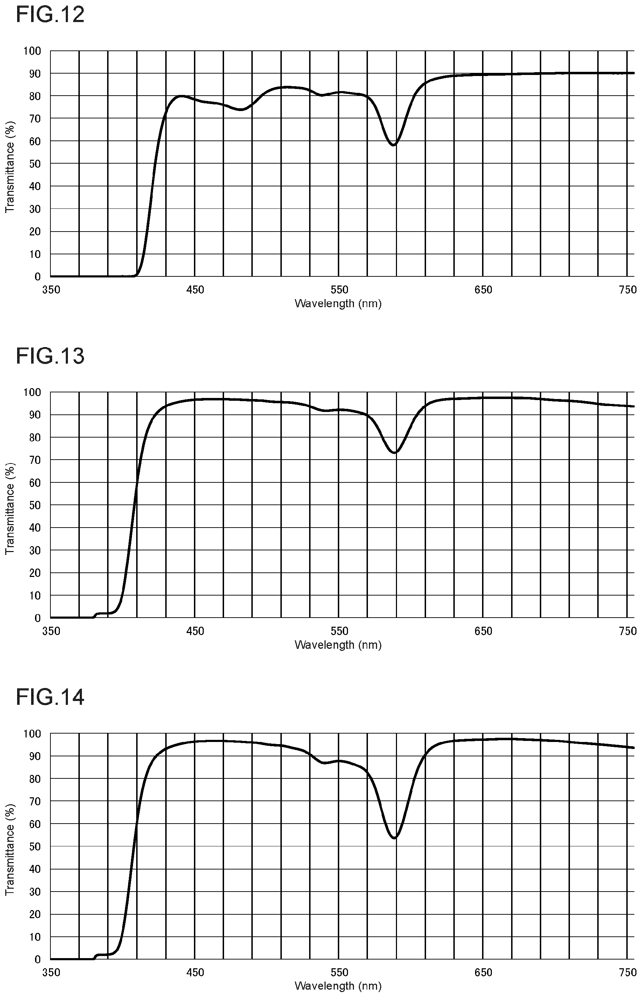

From this result (Table 2, Fig. 12), since the transmittance in the ultraviolet light · blue light region (at the wavelength of 380 to 500 nm) was kept low (for example, 82% or lower), it can be seen that the ultraviolet light and blue light were effectively cut.

In addition, since the transmittance near the wavelength of 587 nm was kept low (for example, 75% or lower), it can be seen that an anti-glare property was imparted and contrast was enhanced.

### (Comparative Example 1)

In the plastic base material of Comparative Example 1, the absorbing dyes 21, 22, 23, and 25 were not added, and the concentration of the absorbing dye 24 was set to 2.5 ppm.

As a result (Table 2), the plastic base material in which the luminous transmittance was 90.1%, the half-value wavelength on the short-wavelength side at which the transmittance is 50% was 408 nm, the average transmittance at 440 to 480 nm was 96.6%, the average transmittance at 500 to 530 nm was 95.1%, the average transmittance at 630 to 700 nm was 97.2%, and the local minimum between 550 and 600 nm was 73.1% (@ 588 nm) was obtained.

From this result (Table 2, Fig. 13), since the transmittance near the wavelength of 588 nm was kept low (for example, 75% or lower), an anti-glare property was imparted and contrast was enhanced; however, since the transmittance in the ultraviolet light · blue light region (at the wavelength of 380 to 500 nm) was higher than those of Examples 1 to 10 and was higher than 95%, it can be seen that ultraviolet light and blue light were hardly cut.

### (Comparative Example 2)

In the plastic base material of Comparative Example 2, the absorbing dyes 21, 22, 23, and 25 were not added, and the concentration of the absorbing dye 24 was set to 6.0 ppm.

As a result (Table 2), the plastic base material in which the luminous transmittance was 83.8%, the half-value wavelength on the short-wavelength side at which the transmittance is 50% was 407 nm, the average transmittance at 440 to 480 nm was 96.4%, the average transmittance at 500 to 530 nm was 93.6%, the average transmittance at 630 to 700 nm was 97.2%, and the local minimum between 550 and 600 nm was 53.6% (@ 588 nm) was obtained.

From this result (Table 2, Fig. 14), since the transmittance near the wavelength of 588 nm was kept low (for example, 75% or lower), an anti-glare property was imparted and contrast was enhanced; however, since the transmittance in the ultraviolet light · blue light region (at the wavelength of 380 to 500 nm) was higher than those of Examples 1 to 10 and was higher than 95%, it can be seen that ultraviolet light and blue light were hardly cut.

### (Comparative Example 3)

In the plastic base material of Comparative Example 3, the absorbing dyes 21, 22, 23, and 25 were not added, and the concentration of the absorbing dye 24 was set to 11.0 ppm.

As a result (Table 2), the plastic base material in which the luminous transmittance was 75.7%, the half-value wavelength on the short-wavelength side at which the transmittance is 50% was 408 nm, the average transmittance at 440 to 480 nm was 96.3%, the average transmittance at 500 to 530 nm was 91.7%, the average transmittance at 630 to 700 nm was 96.7%, and the local minimum between 550 and 600 nm was 32.5% (@ 588 nm) was obtained.

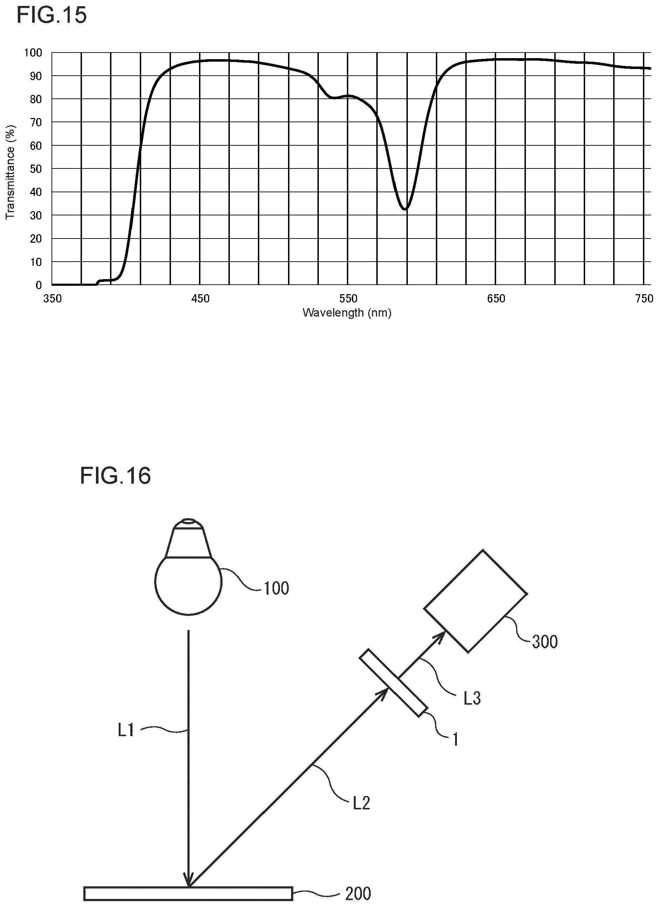

From this result (Table 2, Fig. 15), since the transmittance near the wavelength of 588 nm was kept low (for example, 75% or lower), an anti-glare property was imparted and contrast was enhanced; however, since the transmittance in the ultraviolet light · blue light region (at the wavelength of 380 to 500 nm) was higher than those of Examples 1 to 10 and was higher than 95%, it can be seen that ultraviolet light and blue light were hardly cut.

### [Experiment to Confirm the Effects]

Table 3 and Table 4 are Tables showing results of an experiment to evaluate the transparency, the brightness, and the color rendering index of each of the plastic base materials 1 of Examples 1 to 10 and the plastic base materials of Comparative Examples 1 to 3, which was conducted by the present inventor.

In addition, Fig. 16 is a diagram for explaining an experiment model of the experiment to confirm the effects shown in Table 3 and Table 4.

As shown in Fig. 16, in the experiment to confirm the effects, a white chart 200 (for example, white paper or the like) was disposed on a desk, which is not shown, and an LED light 100 having a correlated color temperature of about 4800K was disposed at a position about 150 cm above the chart 200. Then, the chart 200 was irradiated with illumination light L1 from the LED light 100, reflected light L2 scattered and reflected on the chart 200 was transmitted through one of the respective plastic base materials 1 of Examples 1 to 10 and the respective plastic base materials of Comparative Examples 1 to 3, and its transmitted light L3 was measured by using a spectroscope 300 (MK350S manufactured by UPRtek) at a position obliquely at 45° above the chart 200.

**[Table 3]**

| | (Reference) | Example 1 | Example 2 | Example 3 | Example 4 | Example 5 | Example 6 | Example 7 |
|---|---|---|---|---|---|---|---|---|
| CCT | 4507 | 4790 | 4461 | 4272 | 4652 | 4574 | 4552 | 4519 |
| LUX | 346.62 | 247.14 | 283.82 | 267.25 | 262.38 | 266.47 | 259.68 | 266.35 |
| CRI | 80.39 | 90.97 | 83.86 | 83.56 | 87.04 | 86.58 | 86.21 | 86.39 |
| R1 | 78.13 | 92.81 | 82.79 | 82.38 | 87.25 | 86.54 | 86.08 | 86.42 |
| R2 | 87.52 | 92.01 | 88.48 | 86.26 | 90.59 | 89.72 | 89.55 | 89.99 |
| R3 | 93.91 | 89.31 | 92.54 | 90.06 | 91.87 | 91.35 | 91.42 | 91.73 |
| R4 | 77.80 | 91.97 | 82.85 | 83.91 | 86.55 | 86.36 | 85.90 | 85.98 |
| R5 | 78.24 | 90.07 | 81.93 | 81.03 | 85.63 | 84.93 | 84.55 | 84.94 |
| R6 | 81.90 | 87.21 | 83.27 | 81.09 | 85.41 | 84.67 | 84.46 | 84.88 |
| R7 | 84.49 | 96.05 | 88.80 | 91.16 | 91.51 | 91.83 | 91.41 | 91.03 |
| R8 | 61.14 | 88.35 | 70.20 | 72.57 | 77.53 | 77.22 | 76.31 | 76.15 |
| R9 | -3.32 | 65.17 | 19.74 | 23.66 | 38.63 | 37.13 | 34.90 | 35.24 |
| R10 | 70.03 | 78.11 | 71.67 | 67.10 | 75.56 | 73.87 | 73.50 | 74.41 |
| R11 | 75.32 | 89.21 | 80.40 | 81.05 | 84.03 | 83.77 | 83.26 | 83.44 |
| R12 | 56.50 | 61.62 | 57.84 | 54.57 | 60.17 | 59.09 | 59.18 | 59.98 |
| R13 | 80.30 | 91.91 | 83.75 | 82.38 | 87.65 | 86.76 | 86.37 | 86.80 |
| R14 | 97.56 | 93.93 | 96.37 | 94.73 | 95.75 | 95.43 | 95.48 | 95.65 |
| R15 | 71.45 | 92.35 | 78.09 | 77.66 | 84.57 | 83.53 | 82.91 | 83.37 |

**[Table 4]**

| | (Reference) | Example 8 | Example 9 | Example 10 | Comparative Example 1 | Comparative Example 2 | Comparative Example 3 |
|---|---|---|---|---|---|---|---|
| CCT | 4507 | 4637 | 4571 | 4555 | 4839 | 5126 | 5573 |
| LUX | 346.62 | 279.23 | 260.85 | 273.47 | 304.51 | 314.06 | 275.07 |
| CRI | 80.39 | 85.99 | 86.27 | 86.56 | 87.35 | 92.51 | 94.76 |
| R1 | 78.13 | 85.59 | 86.10 | 86.55 | 87.54 | 94.72 | 95.20 |
| R2 | 87.52 | 89.29 | 89.65 | 89.95 | 91.49 | 94.26 | 98.19 |
| R3 | 93.91 | 91.57 | 91.60 | 91.64 | 92.93 | 91.03 | 88.12 |
| R4 | 77.80 | 85.59 | 85.89 | 86.22 | 86.38 | 93.05 | 96.81 |
| R5 | 78.24 | 84.13 | 84.59 | 85.01 | 86.00 | 91.73 | 97.65 |
| R6 | 81.90 | 84.24 | 84.59 | 84.91 | 86.26 | 89.14 | 92.90 |
| R7 | 84.49 | 91.53 | 91.43 | 91.44 | 91.03 | 96.26 | 96.39 |
| R8 | 61.14 | 75.99 | 76.32 | 76.72 | 77.19 | 89.85 | 92.79 |
| R9 | -3.32 | 33.41 | 34.93 | 36.31 | 38.01 | 70.68 | 83.32 |
| R10 | 70.03 | 73.09 | 73.75 | 74.35 | 77.48 | 82.68 | 90.27 |
| R11 | 75.32 | 83.00 | 83.30 | 83.68 | 84.10 | 90.56 | 94.46 |
| R12 | 56.50 | 58.42 | 59.20 | 59.79 | 61.07 | 63.73 | 66.83 |
| R13 | 80.30 | 85.95 | 86.44 | 86.87 | 88.33 | 94.35 | 97.19 |
| R14 | 97.56 | 95.63 | 95.60 | 95.59 | 96.45 | 94.87 | 92.62 |
| R15 | 71.45 | 82.15 | 82.89 | 83.50 | 84.74 | 94.54 | 89.66 |

In Table 3 and Table 4, "CCT" indicates the correlated color temperature, "LUX" indicates the lux, "CRI" indicates the color rendering index, "R1" to "R8" indicate average color rendering index (Ra), and "R9" to "R15" indicate special color rendering index (Ri).

In addition, in Table 3 and Table 4, "reference" indicates a result of directly measuring reflected light L2 scattered and reflected on the chart 200 with the spectroscope 300 without disposing any of the respective plastic base materials 1 of Examples 1 to 10 or the respective plastic base materials of Comparative Examples 1 to 3 in front of the spectroscope 300.

### [Consideration of Results of the Experiment]

Regarding "CCT" in Table 3 and Table 4, when "reference" and Examples 1 to 10 and Comparative Examples 1 to 3 are compared, it can be seen that the correlated color temperatures of the respective plastic base materials 1 of Examples 1 to 10 were in a range of ±7% (4191 to 4822) relative to "reference", but the correlated color temperatures of the respective plastic base materials of Comparative Examples 1 to 3 changed by +7.4%, +13.7%, and +23.7%, respectively.

Since this means that changes in correlated color temperature between the incident light (reflected light L2) and the transmitted light L3 were significantly small in the respective plastic base materials 1 of Examples 1 to 10, it can be determined that the respective plastic base materials 1 of Examples 1 to 10 had high transparency (that is, look colorless and transparent).

In addition, regarding "LUX" in Table 3 and Table 4, when "reference" and Examples 1 to 10 are compared, since the lux of each of the plastic base materials 1 of Examples 1 to 10 was 70% or more (243 or more) than that of "reference", the respective plastic base materials 1 of Examples 1 to 10 became brighter (that is, had a smaller decrease in lux) as a whole.

In addition, regarding "CRI" in Table 3 and Table 4, when "reference" and Examples 1 to 10 are compared, since the color rendering index of each of the plastic base materials 1 of Examples 1 to 10 was higher than that of "reference", it can be determined that the color rendering index was improved by the respective plastic base materials 1 of Examples 1 to 10.

In addition, regarding "R9" (special color rendering index of red) in Table 3 and Table 4, when "reference" and Examples 1 to 10 are compared, since the special color rendering index "R9" of each of the plastic base materials 1 of Examples 1 to 10 was much higher than that of "reference", it can be determined that the color rendering index of red was improved (that is, the hue balance was improved) by the respective plastic base materials 1 of Examples 1 to 10.

In this way, in the plastic base material 1 of the present embodiment (Examples 1 to 10), the plastic base material 1 which has an anti-glare function and a high transparency (that is, looks colorless and transparent) while being capable of cutting ultraviolet light and blue light is achieved by adjusting the contents (concentrations) of the respective absorbing dyes 21 to 25 such that the spectral transmittance curve has a certain balance.

Hence, a bright lens which is highly fashionable and also suitable for daily use can be provided by applying the plastic base material 1 to an eyeglass lens, for example.

Although the embodiment of the present invention has been described above, the present invention is not limited to the configuration of the above embodiment, and various modifications are possible within the scope of the technical idea of the present invention.

For example, although in the present embodiment (Examples 1 to 10), the plastic base material 1 has been described as being usable for an eyeglass lens, a face shield, and the like, the plastic base material 1 is not necessarily limited to such usages, and can be applied, for example, to various usages such as a contact lens, a goggle (for sports in general such as swimming, skiing, and riders), a helmet shield, a windshield, and a window glass. In addition, a functional layer (for example, one or more layers selected from the group consisting of a primer layer, a hard coat layer, an antireflective layer, and a water-repellent and oil-repellent layer) may be provided on at least one surface of an outer surface (a surface on the object side) or an inner surface (a surface on the eye side) of the plastic base material 1 depending on the usage.

### (Second Embodiment)

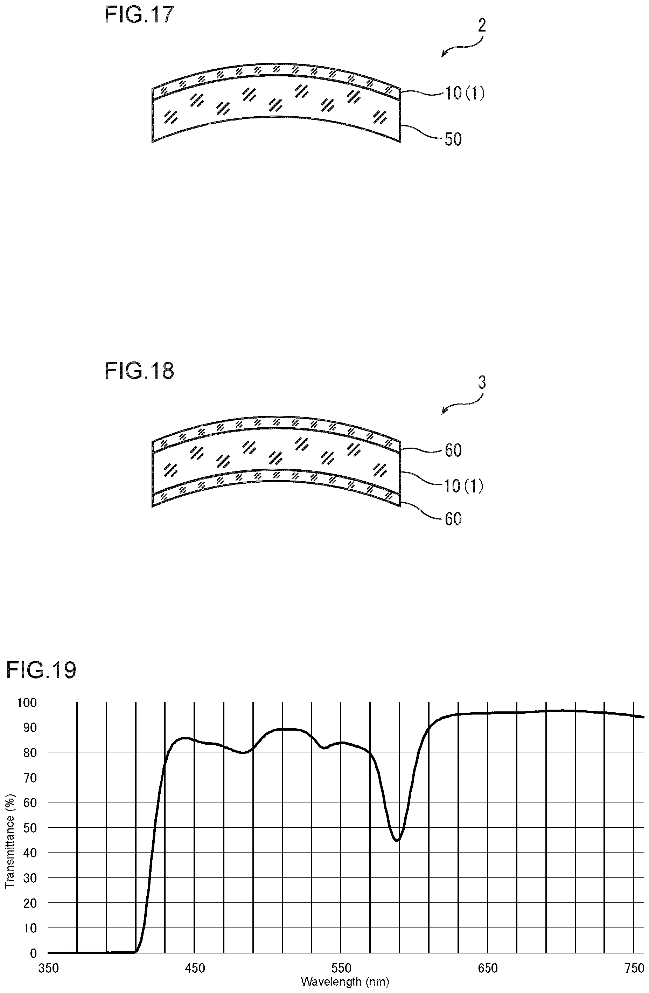

Fig. 17 is a longitudinal sectional view for explaining a configuration of a plastic base material 2 according to a second embodiment of the present invention. As shown in Fig. 17, the plastic base material 2 of the present embodiment is different from the plastic base material 1 of the first embodiment in that the plastic base material 2 includes the plastic base material 1 on an upper surface of a base material 50, having a laminate structure, via an ultraviolet curable adhesive or the like, which is not shown.

By thinly molding the plastic base material 1 of the first embodiment and laminating the plastic base material 1 with another member in this way as well, the same actions and effects as the plastic base material 1 can be obtained. Note that the relation between the thickness of the plastic base material 1, the concentrations of the absorbing dyes 21 to 25, and transmittance is determined in accordance with a so-called Lambert-Beer law.

Note that although the plastic base material 2 of the present embodiment includes the plastic base material 1 on the upper surface of the base material 50, the plastic base material 1 may be disposed on the lower surface of the base material 50 or may be disposed on both surfaces thereof.

In addition, the plastic base material 2 of the present embodiment does not necessarily have to have a laminate structure, and the plastic base material 1 can also be formed on the base material 50 by using at least one coating method selected from an immersion coating method, a cast coating method, a spray coating method, a spin coating method, and the like.

### (Third Embodiment)

Fig. 18 is a longitudinal sectional view for explaining a configuration of a plastic base material 3 according to a third embodiment of the present invention. As shown in Fig. 18, the plastic base material 3 of the present embodiment is different from the plastic base material 1 of the first embodiment in that the plastic base material 3 includes a multi-coat layer 60 which function as an antireflective film on a front surface (an outer surface) and a back surface (an inner surface) of the plastic base material 1 of the first embodiment.

By applying multi-coating (that is, forming the multi-coat layer 60) onto the plastic base material 1 of the first embodiment in this way, spectral transmittance can be improved (the detail will be described later).

### [Method for Manufacturing Plastic Base Material 3]

The plastic base material 3 of the present embodiment is manufactured by the following processes, for example.

### 1. Preparation of Plastic Base Material 1

The plastic base material 1 is manufactured in accordance with the above-mentioned [Method for Manufacturing Plastic Base Material 1].

### 2. Formation of Multi-coat layer 60

Subsequently, an antireflective film (the multi-coat layer 60) made of an inorganic compound such as silicon oxide or titanium oxide is formed on the front surface (the outer surface) and the back surface (the inner surface) of the plastic base material 1. As a specific method for forming the multi-coat layer 60, for example, a dry method such as a vacuum deposition method, a sputtering method, an ion plating method, an ion beam assisted deposition method, or a CVD method, which is used in general, can be used.

Note that the multi-coat layer 60 may have any of single layer- or multi layer-configuration. In the case of employing a multi-layer film, it is preferable that the multi-coat layer 60 have a multi-layer film structure in which an antireflective film having a low refractive index and an antireflective film having a high refractive index are alternately stacked. For the high refractive index film used in the multi-layer film structure, for example, ZnO, TiO₂, CeO₂, Sb₂O₅, SnO₂, ZrO₂, Al₂O₃, Ta₂O₅, or the like may be used. For the low refractive index film, for example, SiO₂ or the like may be used.

Note that the plastic base material 3 of the present embodiment is described as including the multi-coat layer 60 on the front surface (the outer surface) and the back surface (the inner surface) of the plastic base material 1, but is not necessarily limited to such a configuration, and the multi-coat layer 60 only has to be formed on at least one surface of the outer surface (the surface on the object side) or the inner surface (the surface on the eye side) of the plastic base material 1.

Hereinafter, the plastic base material 3 of the present embodiment will be described by giving Examples 11 to 20. Note that the present invention is not limited to the following Examples.

The respective plastic base materials 3 of the present Examples 11 to 20 were such that the multi-coat layer 60 was formed on the front surface (the outer surface) and the back surface (the inner surface) of each of the plastic base materials 1 of Examples 1 to 10 in accordance with the above-mentioned manufacturing method.

Table 5 and Table 6 are tables showing the materials (the resin material 10 and the absorbing dyes 21 to 25), the outer shape (the diameter and the thickness), the luminous transmittance, the half-value wavelength (the half-value wavelength on the short-wavelength side at which the transmittance is 50%), the average transmittance at a wavelength of 440 to 480 nm, the average transmittance at 500 to 530 nm, the average transmittance at 630 to 700 nm, and the local minimum between 550 and 600 nm and its wavelength of each of the plastic base materials 3 of Examples 11 to 20.

In addition, Fig. 19 to Fig. 28 are diagrams showing a spectral transmittance curve of each of the plastic base materials 3 of Examples 11 to 20. Note that as in the case of Fig. 3 to Fig. 15, in Fig. 19 to Fig. 28, the horizontal axis indicates the wavelength (nm), and the vertical axis indicates the transmittance (%).

**[Table 5]**

| | | Example 11 | Example 12 | Example 13 | Example 14 | Example 15 |
|---|---|---|---|---|---|---|
| Resin material 10 (monomer) | | 1.6 MR-8 | 1.6 MR-8 | 1.6 MR-8 | 1.6 MR-8 | 1.6 MR-8 |
| Absorbing dyes | PD311 (24) | 6.0 ppm | 2.0 ppm | 3.45 ppm | 3.45 ppm | 3.45 ppm |
| | Red HB (23) | 3.65 ppm | 3.65 ppm | 3.65 ppm | 3.65 ppm | 3.65 ppm |
| | Green G (25) | 0.95 ppm | 0.95 ppm | 0.95 ppm | 0.95 ppm | 0.95 ppm |
| | FDB-006 (22) | 1.5 ppm | 1.5 ppm | 4.0 ppm | 0.75 ppm | 1.5 ppm |
| | UV420 (21) | 0.53% | 0.53% | 0.53% | 0.53% | 0.70% |
| Diameter | | 70 mm | 70 mm | 70 mm | 70 mm | 70 mm |
| Thickness | | 2 mm | 2 mm | 2 mm | 2 mm | 2 mm |
| Multi-coat layer 60 | | Incl. | Incl. | Incl. | Incl. | Incl. |
| Luminous transmittance | | 79.4% | 88.8% | 84.9% | 85.3% | 84.6% |
| Half-value wavelength | | 423 nm | 422 nm | 423 nm | 422 nm | 424 nm |
| Average transmittance at 440 to 480 nm | | 83.3% | 84.0% | 68.6% | 88.8% | 83.1% |
| Average transmittance at 500 to 530 nm | | 88.5% | 90.8% | 88.8% | 90.3% | 89.6% |
| Average transmittance at 630 to 700 nm | | 95.9% | 96.4% | 95.9% | 96.2% | 96.0% |
| Local minimum between 550 and 600 nm (wavelength of the local minimum) | | 44.8% (588 nm) | 75.0% (588 nm) | 62.6% (588 nm) | 62.6% (588 nm) | 61.5% (588 nm) |

**[Table 6]**

| | | Example 16 | Example 17 | Example 18 | Example 19 | Example 20 |
|---|---|---|---|---|---|---|
| Resin material 10 (monomer) | | 1.6 MR-8 | 1.6 MR-8 | 1.6 MR-8 | 1.6 MR-8 | 1.6 MR-8 |
| Absorbing dyes | PD311 (24) | 3.45 ppm | 3.45 ppm | 3.45 ppm | 3.45 ppm | 3.45 ppm |
| | Red HB (23) | 3.65 ppm | 5.65 ppm | 1.65 ppm | 3.65 ppm | 3.65 ppm |
| | Green G (25) | 0.95 ppm | 0.95 ppm | 0.95 ppm | 2.5 ppm | 0.3 ppm |
| | FDB-006 (22) | 1.5 ppm | 1.5 ppm | 1.5 ppm | 1.5 ppm | 1.5 ppm |
| | UV420 (21) | 0.30% | 0.53% | 0.53% | 0.53% | 0.53% |
| Diameter | | 70 mm | 70 mm | 70 mm | 70 mm | 70 mm |
| Thickness | | 2 mm | 2 mm | 2 mm | 2 mm | 2 mm |
| Multi-coat layer 60 | | Incl. | Incl. | Incl. | Incl. | Incl. |
| Luminous transmittance | | 85.1% | 84.3% | 86.9% | 85.0% | 86.1% |
| Half-value wavelength | | 420 nm | 422 nm | 422 nm | 422 nm | 422 nm |
| Average transmittance at 440 to 480 nm | | 84.1% | 83.0% | 85.2% | 83.7% | 84.5% |
| Average transmittance at 500 to 530 nm | | 89.9% | 87.7% | 92.5% | 89.9% | 90.5% |
| Average transmittance at 630 to 700 nm | | 96.5% | 96.2% | 96.3% | 95.7% | 97.9% |
| Local minimum between 550 and 600 nm (wavelength of the local minimum) | | 62.5% (588 nm) | 63.3% (588 nm) | 64.0% (588 nm) | 62.4% (588 nm) | 63.9% (588 nm) |

### (Example 11)

In the plastic base material 3 of Example 11, by forming the multi-coat layers 60 on the plastic base material 1 of Example 1, the transmittance was increased, and the plastic base material 3 in which the luminous transmittance was 79.4%, the average transmittance at 440 to 480 nm was 83.3%, the average transmittance at 500 to 530 nm was 88.5%, the average transmittance at 630 to 700 nm was 95.9%, and the local minimum between 550 and 600 nm was 44.8% (@ 588 nm) was obtained (Table 5, Fig. 19).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 12)

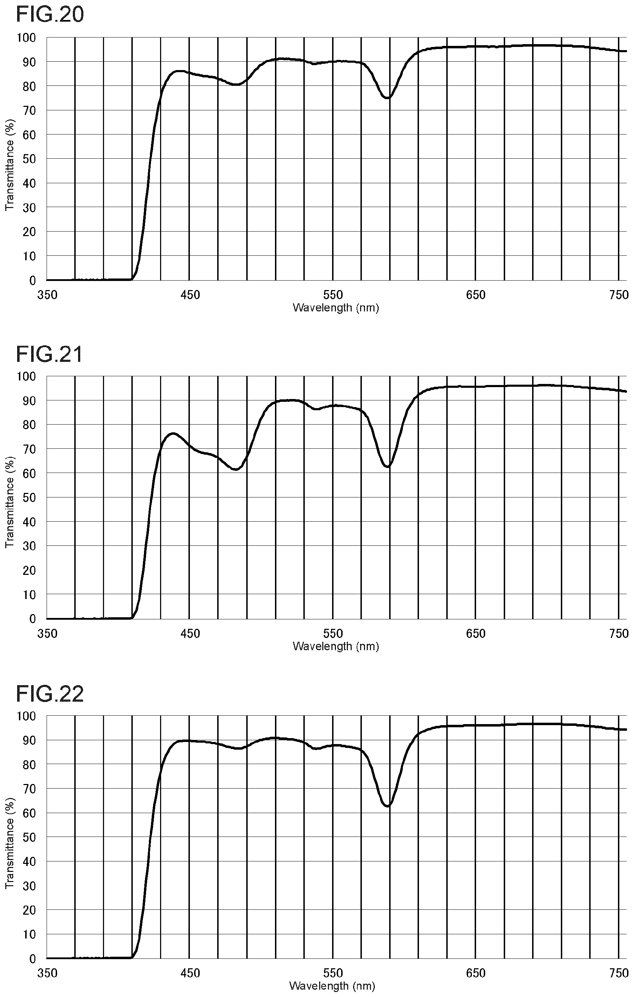

In the plastic base material 3 of Example 12, by forming the multi-coat layers 60 on the plastic base material 1 of Example 2, the transmittance was increased, and the plastic base material 3 in which the luminous transmittance was 88.8%, the average transmittance at 440 to 480 nm was 84.0%, the average transmittance at 500 to 530 nm was 90.8%, the average transmittance at 630 to 700 nm was 96.4%, and the local minimum between 550 and 600 nm was 75.0% (@ 588 nm) was obtained (Table 5, Fig. 20).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 13)

In the plastic base material 3 of Example 13, by forming the multi-coat layers 60 on the plastic base material 1 of Example 3, the transmittance was increased, and the plastic base material 3 in which the luminous transmittance was 84.9%, the average transmittance at 440 to 480 nm was 68.6%, the average transmittance at 500 to 530 nm was 88.8%, the average transmittance at 630 to 700 nm was 95.9%, and the local minimum between 550 and 600 nm was 62.6% (@ 588 nm) was obtained (Table 5, Fig. 21).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 14)

In the plastic base material 3 of Example 14, by forming the multi-coat layers 60 on the plastic base material 1 of Example 4, the transmittance was increased, and the plastic base material 3 in which the luminous transmittance was 85.3%, the average transmittance at 440 to 480 nm was 88.8%, the average transmittance at 500 to 530 nm was 90.3%, the average transmittance at 630 to 700 nm was 96.2%, and the local minimum between 550 and 600 nm was 62.6% (@ 588 nm) was obtained (Table 5, Fig. 22).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 15)

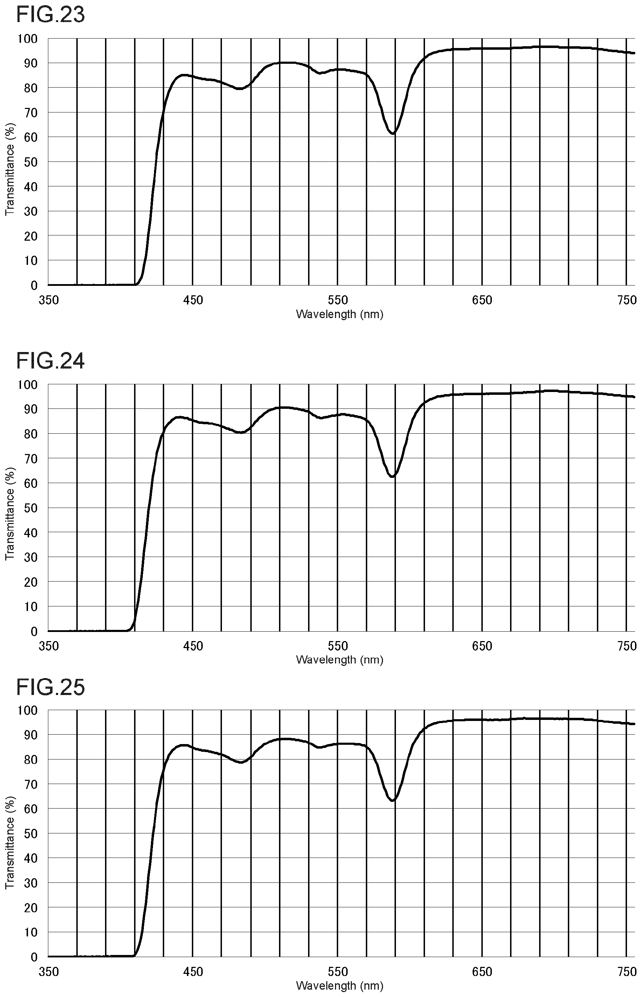

In the plastic base material 3 of Example 15, by forming the multi-coat layers 60 on the plastic base material 1 of Example 5, the transmittance was increased, and the plastic base material 3 in which the luminous transmittance was 84.6%, the average transmittance at 440 to 480 nm was 83.1%, the average transmittance at 500 to 530 nm was 89.6%, the average transmittance at 630 to 700 nm was 96.0%, and the local minimum between 550 and 600 nm was 61.5% (@ 588 nm) was obtained (Table 5, Fig. 23).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 16)

In the plastic base material 3 of Example 16, by forming the multi-coat layers 60 on the plastic base material 1 of Example 6, the transmittance was increased, and the plastic base material 3 in which the luminous transmittance was 85.1%, the average transmittance at 440 to 480 nm was 84.1%, the average transmittance at 500 to 530 nm was 89.9%, the average transmittance at 630 to 700 nm was 96.5%, and the local minimum between 550 and 600 nm was 62.5% (@ 588 nm) was obtained (Table 6, Fig. 24).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 17)

In the plastic base material 3 of Example 17, by forming the multi-coat layers 60 on the plastic base material 1 of Example 7, the transmittance was increased, and the plastic base material 3 in which the luminous transmittance was 84.3%, the average transmittance at 440 to 480 nm was 83.0%, the average transmittance at 500 to 530 nm was 87.7%, the average transmittance at 630 to 700 nm was 96.2%, and the local minimum between 550 and 600 nm was 63.3% (@ 588 nm) was obtained (Table 6, Fig. 25).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 18)

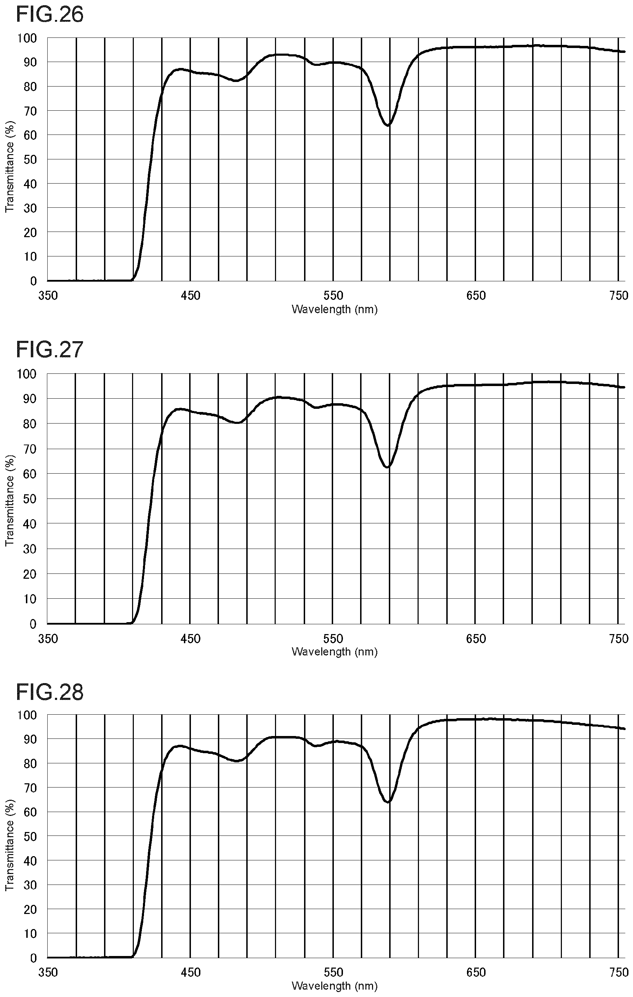

In the plastic base material 3 of Example 18, by forming the multi-coat layers 60 on the plastic base material 1 of Example 8, the transmittance was increased, and the plastic base material 3 in which the luminous transmittance was 86.9%, the average transmittance at 440 to 480 nm was 85.2%, the average transmittance at 500 to 530 nm was 92.5%, the average transmittance at 630 to 700 nm was 96.3%, and the local minimum between 550 and 600 nm was 64.0% (@ 588 nm) was obtained (Table 6, Fig. 26).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 19)

In the plastic base material 3 of Example 19, by forming the multi-coat layers 60 on the plastic base material 1 of Example 9, the transmittance was increased, and the plastic base material 3 in which the luminous transmittance was 85.0%, the average transmittance at 440 to 480 nm was 83.7%, the average transmittance at 500 to 530 nm was 89.9%, the average transmittance at 630 to 700 nm was 95.7%, and the local minimum between 550 and 600 nm was 62.4% (@ 588 nm) was obtained (Table 6, Fig. 27).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### (Example 20)

In the plastic base material 3 of Example 20, by forming the multi-coat layers 60 on the plastic base material 1 of Example 10, the transmittance was increased, and the plastic base material 3 in which the luminous transmittance was 86.1%, the average transmittance at 440 to 480 nm was 84.5%, the average transmittance at 500 to 530 nm was 90.5%, the average transmittance at 630 to 700 nm was 97.9%, and the local minimum between 550 and 600 nm was 63.9% (@ 588 nm) was obtained (Table 6, Fig. 28).

In this way, in the present Example as well, since the transmittance in the ultraviolet light · blue light region (at the wavelength of 380 to 500 nm) was kept low (for example, 90% or lower), the ultraviolet light and blue light were effectively cut.

In addition, since the transmittance near the wavelength of 588 nm was kept low (for example, 75% or lower), the anti-glare property was imparted and contrast was enhanced.

### [Experiment to Confirm the Effects]

Table 7 and Table 8 are Tables showing results of an experiment to evaluate the transparency, the brightness, and the color rendering index of each of the plastic base materials 3 of Examples 11 to 20, which was conducted by the present inventor. Note that this experiment to confirm the effects is the same as that conducted on each of the plastic base materials 1 of Examples 1 to 10.

**[Table 7]**

| | (Reference) | Example 11 | Example 12 | Example 13 | Example 14 | Example 15 |
|---|---|---|---|---|---|---|
| CCT | 4684 | 4956 | 4593 | 4410 | 4825 | 4712 |
| LUX | 202.93 | 157.81 | 179.19 | 175.71 | 172.55 | 173.05 |
| CRI | 81.62 | 92.12 | 84.45 | 84.41 | 88.16 | 87.50 |
| R1 | 79.56 | 93.94 | 83.32 | 83.20 | 88.48 | 87.49 |
| R2 | 88.70 | 93.22 | 89.22 | 87.19 | 91.77 | 90.77 |
| R3 | 94.42 | 90.41 | 93.27 | 90.88 | 92.76 | 92.28 |
| R4 | 78.76 | 92.80 | 83.00 | 84.38 | 87.36 | 86.91 |
| R5 | 79.56 | 91.09 | 82.47 | 81.92 | 86.78 | 85.88 |
| R6 | 83.27 | 88.54 | 84.13 | 82.23 | 86.70 | 85.87 |
| R7 | 85.23 | 96.83 | 89.07 | 91.57 | 92.03 | 92.18 |
| R8 | 63.42 | 90.12 | 71.15 | 73.93 | 79.38 | 78.60 |
| R9 | 2.21 | 70.49 | 22.15 | 27.19 | 43.76 | 41.13 |
| R10 | 72.53 | 80.82 | 73.32 | 69.15 | 78.16 | 76.22 |
| R11 | 76.55 | 90.16 | 80.64 | 81.67 | 85.09 | 84.53 |
| R12 | 58.06 | 63.13 | 58.89 | 56.22 | 61.70 | 60.65 |
| R13 | 81.84 | 93.22 | 84.45 | 83.36 | 89.04 | 87.89 |
| R14 | 97.85 | 94.52 | 96.81 | 95.22 | 96.27 | 95.97 |
| R15 | 73.25 | 93.65 | 78.80 | 78.79 | 86.14 | 84.76 |

**[Table 8]**

| | (Reference) | Example 16 | Example 17 | Example 18 | Example 19 | Example 20 |
|---|---|---|---|---|---|---|
| CCT | 4684 | 4725 | 4661 | 4763 | 4731 | 4675 |
| LUX | 202.93 | 169.14 | 181.56 | 192.78 | 182.68 | 189.48 |
| CRI | 81.62 | 87.47 | 87.44 | 86.79 | 87.40 | 87.55 |
| R1 | 79.56 | 87.48 | 87.55 | 86.40 | 87.34 | 87.63 |
| R2 | 88.70 | 90.80 | 91.03 | 90.09 | 90.70 | 90.91 |
| R3 | 94.42 | 92.29 | 92.48 | 92.24 | 92.29 | 92.32 |
| R4 | 78.76 | 86.91 | 86.79 | 86.10 | 86.81 | 87.03 |
| R5 | 79.56 | 85.93 | 86.03 | 84.92 | 85.78 | 86.08 |
| R6 | 83.27 | 85.90 | 86.06 | 85.19 | 85.81 | 86.04 |
| R7 | 85.23 | 92.02 | 91.60 | 91.99 | 92.08 | 91.97 |
| R8 | 63.42 | 78.42 | 77.98 | 77.39 | 78.37 | 78.45 |
| R9 | 2.21 | 40.65 | 40.17 | 37.20 | 40.42 | 41.05 |
| R10 | 72.53 | 76.27 | 76.71 | 74.89 | 76.09 | 76.49 |
| R11 | 76.55 | 84.56 | 84.46 | 83.67 | 84.44 | 84.69 |
| R12 | 58.06 | 61.05 | 61.51 | 59.61 | 60.76 | 61.36 |
| R13 | 81.84 | 87.91 | 88.06 | 86.87 | 87.77 | 88.05 |
| R14 | 97.85 | 95.99 | 96.09 | 96.02 | 96.00 | 95.98 |
| R15 | 73.25 | 84.74 | 84.87 | 83.22 | 84.54 | 84.93 |

### [Consideration of Results of the Experiment]

Regarding "CCT" in Table 7 and Table 8, when "reference" and Examples 11 to 20 are compared, the correlated color temperatures of the respective plastic base materials 3 of Examples 11 to 20 were in a range of ±7% (4356 to 5012) relative to "reference", and the respective plastic base materials 3 of Examples 11 to 20 had high transparency (that is, look colorless and transparent) like the respective plastic base materials 1 of Examples 1 to 10.

In addition, regarding "LUX" in Table 7 and Table 8, when "reference" and Examples 11 to 20 are compared, the lux of each of the plastic base materials 3 of Examples 11 to 20 was 70% or more (142 or more) than that of "reference", and the plastic base materials 3 of Examples 11 to 20 became brighter (that is, had a smaller decrease in lux) as a whole like the respective plastic base materials 1 of Examples 1 to 10.

In addition, regarding "CRI" in Table 7 and Table 8, when "reference" and Examples 11 to 20 are compared, the color rendering index of each of the plastic base materials 3 of Examples 11 to 20 was higher than that is "reference", the color rendering index was improved like the respective plastic base materials 1 of Examples 1 to 10.

In addition, regarding "R9" (special color rendering index of red) in Table 7 and Table 8, when "reference" and Examples 11 to 20 are compared, the special color rendering index "R9" of each of the plastic base materials 3 of Examples 11 to 20 was much higher than that of "reference", and the color rendering index of red was improved (that is, the hue balance was improved) like the respective plastic base materials 1 of Examples 1 to 10.

In this way, the plastic base material 3 of the present embodiment (Examples 11 to 20) is also adjusted such that the spectral transmittance curve has a certain balance, to have an anti-glare function and a high transparency (that is, looks colorless and transparent) while being capable of cutting ultraviolet light and blue light like the plastic base material 1 of the first embodiment.

Note that it should be considered that the embodiments disclosed herein are mere examples in all respects and not restrictive at all. It is intended that the scope of the present invention is indicated by not the above description but claims, and that any change that has equivalent meaning as and fall within the claims are included.

### [Reference Signs List]

1: plastic base material
2: plastic base material
3: plastic base material
10: resin material
21: absorbing dye
22: absorbing dye
23: absorbing dye
24: absorbing dye
25: absorbing dye
50: base material
60: multi-coat layer
100: LED light
200: chart
300: spectroscope

## Claims

1. A translucent plastic base material comprising a resin and an absorbing dye, wherein in a spectral transmittance curve,
a half-value wavelength on the short-wavelength side at which a transmittance is 50% is 410 to 430 nm,
an average transmittance at 440 to 480 nm is 60 to 90%,
an average transmittance at 500 to 530 nm is 75 to 95%,
an average transmittance at 630 to 700 nm is 80 to 98%, and
there is a local minimum between 550 and 600 nm.

2. The plastic base material according to claim 1, wherein the local minimum is 35 to 75%.

3. The plastic base material according to claim 1 that satisfies T1<T2<T3 where T1 represents the average transmittance at 440 to 480 nm, T2 represents the average transmittance at 500 to 530 nm, and T3 represents the average transmittance at 630 to 700 nm.

4. The plastic base material according to claim 1, wherein the resin is at least one selected from the group consisting of a urethane thermosetting resin, a (meth)acrylic thermosetting resin, a polycarbonate resin, and a polyamide resin.

5. The plastic base material according to claim 1, wherein
the absorbing dye contains:
a first dye having a maximum absorption wavelength in a range of 350 to 425 nm;
a second dye having a maximum absorption wavelength in a range of 460 to 480 nm;
a third dye having a maximum absorption wavelength in a range of 490 to 510 nm;
a fourth dye having a maximum absorption wavelength in a range of 565 to 605 nm; and
a fifth dye having a maximum absorption wavelength in a range of 590 to 650 nm.

6. The plastic base material according to claim 5, wherein
the first dye is a benzotriazole dye,
the second dye is a merocyanine dye,
the third dye is an anthraquinone dye,
the fourth dye is a tetraazaporphyrin dye, and
the fifth dye is an anthraquinone dye.

7. The plastic base material according to claim 6, wherein
a concentration of the first dye is 0.2 to 0.8%,
a concentration of the second dye is 0.5 to 2.0 ppm,
a concentration of the third dye is 1.0 to 6.0 ppm,
a concentration of the fourth dye is 1.0 to 7.0 ppm, and
a concentration of the fifth dye is 0.2 to 3.0 ppm.

8. The plastic base material according to claim 1, wherein
a correlated color temperature of light after passing through the plastic base material is in a range of ±7% of a correlated color temperature of light before passing through the plastic base material.

9. The plastic base material according to claim 1, comprising a multi-coat layer which functions as an antireflective film on at least one surface of an outer surface or an inner surface of the plastic base material.

10. A plastic eyeglass lens comprising the plastic base material according to any one of claims 1 to 9.

11. The plastic eyeglass lens according to claim 10, wherein the plastic base material is formed by being laminated on a base material.

12. The plastic eyeglass lens according to claim 9, comprising a functional layer on at least one surface of an outer surface or an inner surface of the plastic eyeglass lens, wherein
the functional layer is one or more layers selected from the group consisting of a primer layer, a hard coat layer, an antireflective layer, and a water-repellent and oil-repellent layer.
